(19) Europäisches Patentamt
European Patent Office
Office européen des brevets

(11) **EP 4 415 065 A1**

(12) **EUROPEAN PATENT APPLICATION**

(43) Date of publication:
**14.08.2024 Bulletin 2024/33**

(21) Application number: **23220232.5**

(22) Date of filing: **27.12.2023**

(51) International Patent Classification (IPC):
*H01M 4/04* (2006.01)   *H01M 4/131* (2010.01)
*H01M 4/1391* (2010.01)   *H01M 4/62* (2006.01)
*H01M 10/052* (2010.01)   *H01M 10/0562* (2010.01)
*H01M 4/02* (2006.01)

(52) Cooperative Patent Classification (CPC):
**H01M 10/0562; H01M 4/0404; H01M 4/0471;
H01M 4/131; H01M 4/1391; H01M 4/62;
H01M 10/052;** H01M 2004/028; H01M 2300/0071

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.12.2022 KR 20220190869
14.12.2023 KR 20230181407**

(71) Applicant: **SK On Co., Ltd.
Seoul 03161 (KR)**

(72) Inventors:
• **YI, Eun Jeong
34124 Daejeon (KR)**
• **KIM, Min Kyu
34124 Daejeon (KR)**

(74) Representative: **Stolmár & Partner
Patentanwälte PartG mbB
Blumenstraße 17
80331 München (DE)**

(54) **A COMPOSITE CATHODE FOR AN ALL-SOLID BATTERY, A METHOD FOR PREPARING THE SAME, AND AN ALL-SOLID BATTERY INCLUDING THE SAME**

(57) The present disclosure discloses a method for preparing a composite cathode for an all-solid battery, a composite cathode, and an all-solid battery including the same. A method of preparing a composite cathode comprises applying a slurry, which comprises a cathode active material and an oxide-based solid electrolyte, to a substrate to form a composite oxide sheet, and light-sintering the composite oxide sheet by irradiating light thereon to form a sintered composite oxide sheet. A composite cathode comprises a cathode current collector and a sintered composite oxide sheet comprising a cathode active material and an oxide-based solid electrolyte, formed on at least one surface of the cathode current collector, and a radius of curvature of 5R or less.

FIG. 5

**Description**

**TECHNICAL FIELD**

The technology and implementations disclosed herein generally relate to a method for preparing a composite cathode for an all-solid battery and a composite cathode for an all-solid battery, and also relates to an all-solid battery comprising the composite cathode.

**BACKGROUND**

Typical lithium-ion batteries (LIB) use a liquid electrolyte, which penetrates into the gap between anode and cathode to serve as a conduction path for lithium ions.

Lithium-ion batteries also can use solid electrolyte but are typically inferior to those using liquid electrolytes due to reduced surface contact between solid electrode active material and solid electrolyte. As a result of the reduced contact surface area, conduction of lithium ions is hindered, and resistance may be generated at the interface between the electrode active material and the solid electrolyte.

There is a need in the art to provide a composite cathode for an all-solid battery, such as a lithium-ion battery, which has improved conductivity.

**SUMMARY**

Provided herein is a composite cathode for an all-solid battery and a method for preparing the same.

In one aspect, the present disclosure provides a method for preparing a composite cathode, *e.g.,* for use in an all-solid battery, the method comprising:

    a) providing a slurry comprising a cathode active material and an oxide-based solid electrolyte;
    b) applying the slurry to a substrate to form a composite oxide sheet; and
    c) light-sintering the composite oxide sheet with irradiating light to form a sintered composite oxide sheet.

In one embodiment, the substrate is a cathode current collector. In one embodiment, the light-sintering is performed in a pulsed method. In one embodiment, the light-sintering is performed at a light irradiation time per pulse of about 1000 $\mu$s to 4500 $\mu$s. In one embodiment, the irradiating light has a light intensity of 25 J/(s·cm$^2$) to 150 J/(s·cm$^2$). In one embodiment, the cathode active material and the oxide-based solid electrolyte have an optimal sintering temperature difference of about 150°C or higher.

In one embodiment, the slurry further comprises a carbon-based conductive material or a metal oxide-based conductive material. In one embodiment, the carbon-based conductive material comprises least one material selected from the group consisting of natural graphite, artificial graphite, expanded graphite, carbon black, acetylene black, KETJENBLACK®, channel black, furnace black, lamp black, summer black, a carbon fiber, a fluorocarbon, graphene, a carbon nanofiber, a graphitized carbon flake, a carbon tube, a carbon nanotube, and an activated carbon. In one embodiment, the metal oxide-based conductive material comprises least one material selected from the group consisting of indium tin oxide (ITO), indium zinc oxide (IZO), antimony tin oxide (ATO), fluorinated tin oxide (FTO), aluminum zinc oxide (AZO), magnesium indium oxide (MIO), zinc gallium oxide (GZO), gallium indium oxide (GIO), indium-gallium-zinc oxide (IGZO), niobium-strontium-titanium oxide (Nb-STO), indium cadmium oxide (ICO), zinc boron oxide (BZO), SZO (SiO$_2$-ZnO), and indium oxide (In$_2$O$_3$).

In one embodiment, the slurry further comprises a light-sintering aid. In one embodiment, the light-sintering aid comprises oxide particles containing lithium and at least one metal selected from the group consisting of chromium (Cr), manganese (Mn), cobalt (Co), nickel (Ni), copper (Cu), niobium (Nb), molybdenum (Mo), ruthenium (Ru), rhodium (Rh), palladium (Pd), vanadium (V), tungsten (W), iron (Fe), cerium (Ce), praseodymium (Pr), neodymium (Nd), terbium (Tb), erbium (Er), zinc (Zn), bismuth (Bi), arsenic (As), antimony (Sb), and selenium (Se). In one embodiment, the slurry may further include a binder.

In one embodiment, the composite oxide sheet and the sintered composite oxide sheet each have a crystal phase that are substantially identical as measured by x-ray diffraction analysis.

In another aspect, the present disclosure provides a composite cathode, the composite cathode comprising, the sintered composite oxide sheet comprising:

    (a) a cathode current collector, and
    (b) a sintered composite oxide sheet comprising a cathode active material and an oxide-based solid electrolyte

wherein the sintered composite oxide sheet is formed on at least one surface of the cathode current collector, and wherein the composite cathode has a radius of curvature of 5R or less.

In one embodiment, the sintered composite oxide sheet has a radius of curvature of about 0.1R to about 5R.

In one embodiment, the cathode active material and the oxide-based solid electrolyte have a difference in optimal sintering temperatures of about 150°C or higher.

The sintered composite oxide sheet may include a secondary phase between the cathode active material and the oxide-based solid electrolyte in a content of 10% by weight or less.

In one embodiment, the sintered composite oxide sheet has a flexural strength ($\sigma$) of about 4 GPa or more, as calculated by Relationship 2:

$$\sigma = 1.19814E\frac{t}{D-t} \qquad (2)$$

wherein the sintered composite oxide sheet is placed between a parallel upper plate and a lower plate, and the upper plate is lowered towards the lower plate, E is Young's modulus, t is a thickness ($\mu$m) of a central portion of the sintered composite oxide sheet, and D is the distance ($\mu$m) between the upper plate and the lower plate immediately before the sintered composite oxide sheet breaks.

In one embodiment, the sintered composite oxide sheet has an ionic conductivity of about $10^{-5}$ S/cm or more. In one embodiment, the sintered composite oxide sheet comprises 10% by weight or less of an organic compound. In one embodiment, the sintered composite oxide sheet further comprises one or both of a carbon-based conductive material or a metal-oxide-based conductive material. In one embodiment, the carbon-based conductive material comprises at least one material selected from the group consisting of natural graphite, artificial graphite, expanded graphite, carbon black, acetylene black, KETJENBLACK®, channel black, furnace black, lamp black, summer black, a carbon fiber, a fluorocarbon, graphene, a carbon nanofiber, a graphitized carbon flake, a carbon tube, a carbon nanotube, and an activated carbon. In one embodiment, the metal oxide-based conductive material comprises at least one selected material from the group consisting of indium tin oxide (ITO), indium zinc oxide (IZO), antimony tin oxide (ATO), fluorinated tin oxide (FTO), aluminum zinc oxide (AZO), magnesium indium oxide (MIO), zinc gallium oxide (GZO), gallium indium oxide (GIO), indium-gallium-zinc oxide (IGZO), niobium-strontium-titanium oxide (Nb-STO), indium cadmium oxide (ICO), zinc boron oxide (BZO), SZO ($SiO_2$-ZnO), and indium oxide ($In_2O_3$).

In one embodiment, the sintered composite oxide sheet further comprises a light-sintering aid. In one embodiment, the light-sintering aid comprises lithium metal oxide particles, the lithium metal oxide particles comprising lithium and at least one metal selected from the group consisting of chromium (Cr), manganese (Mn), cobalt (Co), nickel (Ni), copper (Cu), niobium (Nb), molybdenum (Mo), ruthenium (Ru), rhodium (Rh), palladium (Pd), vanadium (V), tungsten (W), iron (Fe), cerium (Ce), praseodymium (Pr), neodymium (Nd), terbium (Tb), erbium (Er), zinc (Zn), bismuth (Bi), arsenic (As), antimony (Sb), and selenium (Se).

In one embodiment, the radius of curvature of the cathode current collector is smaller than the radius of curvature of the sintered composite oxide sheet.

In another aspect, the present disclosure provides an all-solid lithium secondary battery comprising at least one composite cathode according to any embodiment disclosed herein, a solid electrolyte layer, and an anode.

## BRIEF DESCRIPTION OF DRAWINGS

Certain aspects, features, and advantages of the disclosed technology may be illustrated by the following detailed description with reference to the accompanying drawings.

FIG. 1 is a conceptual diagram illustrating changes in inter-particle contact structure and particle shape during sintering.

FIG. 2 illustrates a method for measuring a radius of curvature and a flexural strength of a composite cathode and a device used in the method.

FIG. 3 is an image of a surface of a sintered composite oxide sheet, such as a composite cathode obtained in Example 1.

FIG. 4 depicts x-ray diffractograms of a sintered composite oxide sheet of a composite cathode obtained in Example 1 and the composite oxide sheet before sintering.

FIG. 5 is an image of a composite cathode of Example 1 during measurement of a radius of curvature and a flexural strength illustrating the flexibility thereof.

**DETAILED DESCRIPTION**

It will be readily understood that the components of the embodiments, as generally described and illustrated in the figures herein, may be arranged and designed in a wide variety of different configurations in addition to the described example embodiments. Thus, the following more detailed description of the example embodiments, as represented in the figures, is not intended to limit the scope of the embodiments, as claimed, but is merely representative of example embodiments.

Reference throughout this specification to "one embodiment" or "certain embodiment" (or the like) means that a particular feature, structure, or characteristic described in connection with the embodiment is included in at least one embodiment. Thus, the appearance of the phrases "in one embodiment" or "in a certain embodiment" or the like in various places throughout this specification are not necessarily all referring to the same embodiment.

Hereinafter, unless otherwise defined in this specification, when a portion such as a layer, a film, a thin film, a region, a plate, or the like is provided "on" or "above" the other portion, this may include not only a case of being "directly on" and "contacting" the other portion, but also a case of an intervening layer or object therebetween.

As used herein and in the appended claims, the singular forms "a," "an," and "the" include plural references unless the context clearly dictates otherwise. Thus, for example, reference to "a light source" includes a plurality of such light sources and equivalents thereof known to those skilled in the art, and so forth, and reference to "the light source" is a reference to one or more such light sources and equivalents thereof known to those skilled in the art, and so forth.

The term "about" is used to mean within 10% of the value to which it refers. For example, "about 50" refers to a numerical range of 45 to 55. When used to modify a temperature, "about" refers to a range that is within 5 degrees of the named value. For example, about 20°C refers to a temperature range of 15°C to 25°C.

Unless indicated otherwise, all numerical ranges used in the present specification may include all values within the range including the lower limit and the upper limit, increments logically derived in a form and span in a defined range, all double limited values, and all possible combinations of the upper limit and the lower limit in the numerical range defined in different forms. Unless otherwise particularly defined in the present specification, values which may be outside a numerical range due to experimental error or rounding of a value are also included in the defined numerical range.

Provided herein is a method for preparing a composite cathode, *e.g.,* for an all-solid battery, which comprises a cathode active material and an oxide-based solid electrolyte, and a composite cathode prepared using the same. Advantageously, composite cathodes prepared according to the methods disclosed herein, for example, using a light-sintering technique (*e.g.,* laser sintering) may exhibit properties advantageous in the manufacture of all-solid batteries, such as durability, flexibility, and conductivity.

In one aspect, a composite cathode may be prepared by a method comprising:

providing a slurry comprising a cathode active material and an oxide-based solid electrolyte;
applying the slurry to a surface of a cathode current collector; and
sintering the surface of the cathode current collector to which the slurry has been applied to form a composite cathode as a sintered composite oxide sheet on the cathode current collector.

The cathode active material is not particularly limited provided it comprises a lithium transition metal oxide that is capable of adsorbing and releasing lithium ions. Non-limiting examples of cathode active materials that may be included in a composite cathode as disclosed herein include an NCM (nickel, cobalt, and element M)-based lithium composite oxide, an NCA (nickel, cobalt, aluminum)-based lithium composite oxide, an NCMA (nickel, cobalt, element M, and aluminum)-based lithium composite oxide, a lithium composite oxide of manganese and nickel such as $LiMn_{1.5}Ni_{0.5}O_4$, lithium titanate, lithium cobaltate (lithium cobalt oxide), lithium nickelate, lithium manganate, titanium oxide, niobium oxide, tungsten oxide, molybdenum oxide, a metal lithium phosphate such as $LiMPO_4$, wherein metal M is Fe, Mn, Co, or Ni, $Li_3V_2(PO_4)_3$, and the like. In the NCM-based lithium composite oxide and the NCMA-based lithium composite oxide, the element M may be one or more elements selected from the group consisting of Na, Mg, Ca, Y, Ti, Zr, Hf, V, Nb, Ta, Cr, Mo, W, Mn, Fe, Cu, Ag, Zn, B, Al, Ga, C, Si, Sn, Ba, and Zr.

In certain embodiments, the cathode active material comprises $Li_aNi_xM_{1-x}O_{2+y}$, wherein:

a is 0.9 to 1.2;
x 0.5 to 0.99;
y is -0.1 to 0.1;
M is one or more elements selected from the group consisting of Na, Mg, Ca, Y, Ti, Zr, Hf, V, Nb, Ta, Cr, Mo, W, Mn, Co, Fe, Cu, Ag, Zn, B, Al, Ga, C, Si, Sn, Ba, and Zr.

In one embodiment, a is 0.95 to 1.08 and x is 0.6 or more, 0.8 or more, 0.9 or more, or 0.98 or more. In one embodiment, M comprises Co and Mn or Al. In certain embodiments, M comprises Co and Mn. In one embodiment, M comprises Co, Mn, and Al.

In certain embodiments, the cathode active material comprises an NCM-based cathode active material, wherein element M is manganese, and the NCM-based cathode active material is represented by $Li_a(Ni_xCo_yMn_z)O_2$, wherein:

a is 0.9 to 1.2;
x is greater than 0 and less than or equal to 0.99;
y is between 0 and 0.5;
z is between 0 and 0.5; and
the sum of x, y, and z is 1.

In one embodiment, the NCM-based cathode active material may further comprise Al (*i.e.,* is an NCMA-based cathode active material).

In certain embodiments, the cathode active material comprises an NCM-based cathode active material, wherein element M is aluminum (*i.e.,* is an NCA-based cathode active material. In certain embodiments, the NCA-based cathode active material is represented by $Li_a(Ni_xCo_yAl_z)O_2$, wherein:

a is 0.9 to 1.2;
x is greater than 0 and less than or equal to 0.99;
y is between 0 and 0.5;
z is between 0 and 0.5; and
the sum of x, y, and z is 1.

In one embodiment, a is 0.95 to 1.08 and x is 0.6 or more, 0.8 or more, 0.9 or more, or 0.98 or more.

In one embodiment, the cathode active material comprises a Li-rich layered oxide (LLO), over-lithiated oxide (OLO), or over-lithiated layered oxide (OLLO) represented by $Li_{1+x}M_{1-x}O_2$, wherein:

x is 0 to 0.4; and
M comprises one or more elements selected from the group consisting of Na, Mg, Ca, Y, Ti, Zr, Hf, V, Nb, Ta, Cr, Mo, W, Ni, Mn, Co, Fe, Cu, Ag, Zn, B, Al, Ga, C, Si, Sn, Ba, and Zr. In one embodiment, M comprises Ni, Co, and Mn or Al. In one embodiment, M comprises Ni, Co, and Mn. In one embodiment, M comprises Ni, Co, Mn, and Al.

In some embodiments, the cathode active material may further comprise a doping element or a coating material, such as on a surface of the cathode active material. The doping element or coating material may comprise one or more of Al, Ti, Ba, Zr, Si, B, Mg, P, W, Na, V, Cu, Zn, Ge, Ag, Ba, Nb, Ga, Cr, Sr, Y, Mo, an alloy thereof, or an oxide thereof. In one embodiment, the doping element comprises two or more of Al, Ti, Ba, Zr, Si, B, Mg, P, W, Na, V, Cu, Zn, Ge, Ag, Ba, Nb, Ga, Cr, Sr, Y, Mo, an alloy thereof, or an oxide thereof. The cathode active material may be passivated by the doping element or coating material, thereby providing a cathode active material having high penetration stability and long lifespan.

In some embodiments, a cathode active material may first be prepared in the form of primary particles, which comprise a lithium transition metal oxide as described herein. In one embodiment, the primary particles may be densified, thereby generating secondary particles having a secondary particle shape.

In one embodiment, a plurality of primary particles may be assembled or aggregated into substantially a single secondary particle, thereby providing a cathode active material as a plurality of secondary particles. In one embodiment, primary particles are not aggregated or assembled, thereby providing the cathode active material as a plurality of primary particles. In one embodiment, the cathode active material is provided as a composition comprising a plurality of primary particles and plurality of secondary particles, which have been formed by aggregation or assembly of a plurality of primary particles or by densifying a plurality of primary particles.

In one embodiment, a composition comprising a plurality of primary particles and a plurality of secondary particles may be subjected to an exclusion process to exclude from the cathode active material larger or differently shaped secondary particles, e.g., secondary particles formed into substantially a single particle by assembling or aggregating more than 10 (*e.g.,* 11, 12, 13, 14, 15, 20, 25, etc.) or more primary particles or secondary particles having an different shape than a majority of the secondary particles. When the cathode active material comprises particles (either single or secondary particles) that are similarly shaped, formation of cracks in the material may be reduced during charging and discharging electricity of a battery, and the BET surface area that reacts with the electrolyte may be reduced, thereby reducing side reactions between the electrolyte and the cathode active material. As such, the lifespan of the secondary battery and a capacity retention rate during repeated charging and discharging may be further improved.

In addition to an anode active material, the slurry used to prepare a composite cathode as disclosed herein comprises an oxide-based solid electrolyte. The oxide-based solid electrolyte may comprise, without limitation, a perovskite-type oxide, a garnet-type oxide, a NASICON-structured oxide, or the like. Examples of perovskite-type oxides that may be used in a composite cathode as disclosed herein include lithium lanthanum titanate and lithium lanthanum niobate ($Li_xLa_{(1-x)/3}NbO_3$, wherein x is 0 to 1). Examples of garnet-type oxides that may be used in a composite cathode as disclosed herein include oxides containing lithium, lanthanum, zirconium, and oxygen, such as those represented by a chemical formula $Li_{7-3x+y-z}A_xLa_{3-y}B_yZr_{2-z}M_zO_{12}$, wherein:

> each of x, y, and z are independently 0 to 1;
> A is a substituted doping element of Li selected from the group consisting of Al, Ga, Ba, Mg, Ca, Sr, K, Ce, and Rb;
> B is a substituted doping element of La selected from the group consisting of Al, Ga, Ba, Mg, Ca, Sr, K, Ce, and Rb; and
> M is a substituted doping element of Zr and at least one selected from the group consisting of Mo, W, Sb, Y, Nb, and Ta.

In one embodiment, the garnet-type oxide is $Li_7La_3Zr_2O_{12}$, $Li_5La_3Nb_2O_{12}$, $Li_5La_3Ta_2O_{12}$, or $Li_6La_2BaTa_2O_{12}$. Examples of NASICON-structured oxide that may be used in a composite cathode as disclosed herein include LAGP ($Li_{1+x}Al_xGe_{2-x}(PO_4)_3$, wherein x is 0 to 1), LATP ($Li_{1+x}Al_xTi_{2-x}(PO_4)$, wherein x is 0 to 1), and LZP ($Li_{1+4x}Zr_{2-x}(PO_4)_3$, where x is 0 to 0.4).

A slurry used to prepare a cathode composite may comprise cathode active material and oxide-based solid electrolyte in a certain ratio. In one embodiment, the slurry is provided comprising cathode active material in a content of about 20% to about 90% by weight and oxide-based solid electrolyte in a content of about 10% to about 80% by weight, based on the weight of the composite cathode.

In one embodiment, a composite cathode according to any embodiment disclosed herein further comprises a conductive material. The type of conductive material is particularly not limited and may comprise, *e.g.,* at least one carbon-based conductive material selected from the group consisting of natural graphite, artificial graphite, expanded graphite, carbon black, acetylene black, KETJENBLACK®, channel black, furnace black, lamp black, summer black, a carbon fiber, a fluorocarbon, graphene, a carbon nano-fiber, a graphitized carbon flake, a carbon tube, a carbon nanotube, and activated carbon. In one embodiment, a conductive material comprises or further comprises at least one metal-based conductive material, such as a metal powder, a metal fiber, or the like. Non-limiting examples of metals that can be included in the metal-based conductive material include copper, nickel, aluminum, indium, tin, silver, and the like. In one embodiment, the at least one metal-based conductive material is a metal-oxide-based material selected from the group consisting of indium tin oxide (ITO), indium zinc oxide (IZO), antimony tin oxide (ATO), fluoro tin oxide (FTO), aluminum zinc oxide (AZO), magnesium indium oxide (MIO), gallium zinc oxide (GZO), gallium indium oxide (GIO), indium gallium zinc oxide (IGZO), niobium strontium titanium oxide (Nb-STO), indium cadmium oxide (ICO), boron zinc oxide (BZO), $SiO_2$-ZnO (SZO), and indium oxide ($In_2O_3$). A slurry used to prepare a cathode composite may comprise certain a content of conductive material. In one embodiment, conductive material may be included in a slurry for preparing a cathode composite in a content of about 0.1% to about 15% by weight, based on a weight of the solid content of the slurry.

A composite cathode according to any embodiment disclosed herein may optionally further include a light-sintering aid, which is a material capable of absorbing light energy in the visible light region (*e.g.,* in a wavelength range of about 380 nm to about 780 nm). A light-sintering aid may comprise colored oxide particles. The color of the oxide particles is not particularly limited and may be any single color or may display multiple colors so as to reflect as much light as possible (e.g., when an L value according to a CIELAB colorimeter is 100). Colored oxide particles may comprise a lithium metal oxide, wherein the metal is one or more transition metal element selected from the group consisting of chromium (Cr), manganese (Mn), cobalt (Co), nickel (Ni), copper (Cu), niobium (Nb), molybdenum (Mo), ruthenium (Ru), rhodium (Rh), palladium (Pd), vanadium (V), tungsten (W), and iron (Fe); one or more lanthanide element one selected from the group consisting of cerium (Ce), praseodymium (Pr), neodymium (Nd), terbium (Tb), and erbium (Er); one or more other metal elements selected from the group consisting of zinc (Zn) and bismuth (Bi); one or more metalloid element selected from the group consisting of arsenic (As) and antimony (Sb); and one or more non-metal element such as selenium (Se). In one embodiment, the colored oxide particles comprise one or more of vanadium (IV) oxide ($V_2O_4$), tungsten (III) oxide ($WO_3$), iron (III) oxide ($Fe_2O_3$), and bismuth (III) oxide ($Bi_2O_3$).

In instances where the cathode active material is capable of absorbing light energy in a visible light region, specifically, light energy in an electromagnetic wavelength range of 380 to 780 nm, a light-sintering aid may not be included or may be used in a small amount. This may be an instance when the cathode active material is visibly colored. However, in instances where the cathode active material does not or does not substantially absorb energy in the visible light region, a light-sintering aid may be beneficial. Because a light-sintering aid is not substantially conductive, when included, the light-sintering aid may be included in a slurry in a content of about 15% by weight or less, based on a weight of the composite cathode, to avoid detrimental effects of conductivity of the composite cathode.

In some embodiments, a slurry used to prepare a composite cathode as disclosed herein may further comprise a binder, which may enhance cohesion of particles within the composite cathode and also adhesion of the slurry to the cathode current collector. Any organic resin having binding properties may be used without particular limitation because, in many instances, most or all of the binder incorporated into the slurry will volatilize during the manufacturing process, *e.g.*, during sintering. In some embodiments, the binder comprises at least one material selected from the group consisting of an acrylic resin, polyvinylidene fluoride-hexafluoropropylene copolymer (PVdF-co-HFP), polyvinylidene fluoride (PVdF), polyacrylonitrile, polyacrylic acid, sodium polyacrylate, polyimide, polymethylmethacrylate, styrene-butadiene rubber (SBR), acrylated styrene-butadiene rubber, polyvinyl alcohol, polyvinyl butyral, starch, ethyl-cellulose, methyl-cellulose, hydroxypropyl cellulose, regenerated cellulose, polyvinylpyrrolidone, tetrafluoroethylene, polyethylene, polypropylene, ethylene-propylene-diene polymer (EPDM), sulfonated-EPDM, carboxymethyl cellulose (CMC), fluororubber, copolymers of propylene and olefin having 2 to 8 carbon atoms, copolymers of (meth)acrylic acid and (meth)acrylic acid alkyl ester, carboxylic acid alkyl ester monomer, ethylenically unsaturated carboxylic acid monomer, and various copolymers thereof. In certain embodiments, at least one binder selected from the group consisting of an acrylic resin, polyvinyl alcohol, and polyvinyl butyral is used. The amount of binder used is not particularly limited and may be included in a slurry used to prepare a composite cathode, *e.g.,* in a content of about 0.1% to about 30% by weight relative to the solid content of the slurry.

A slurry used to prepare a composite cathode according to any embodiment disclosed herein may also further comprise a solvent. The solvent type is not particularly limited. In certain embodiments the solvent is an organic solvent or an aqueous solvent. In certain embodiments, the solvent is at least one solvent selected from the group consisting of water, methyl ethyl ketone, dimethyl ketone, N-methyl-2-pyrrolidone (NMP), ethyl acetate, methoxy propyl acetate, butyl acetate, propyl acetate, isopropyl acetate, glycol acid, butyl ester, butyl glycol, methylalkylpolysiloxane, alkylbenzene, propylene glycol, xylene, monophenyl glycol, aralkyl-modified methylalkylpolysiloxane, polyether-modified dimethylpolysiloxane copolymer, polyether-modified dimethylpolysiloxane copolymer, polyacrylate, alkylbenzene, diisobutyl ketone, organic modified polysiloxane, acetone, methanol, ethanol, isopropanol, n-propanol, butanol, tert-butanol, n-butanol, isobutanol, modified polyacrylate, modified polyurethane, and modified polysiloxane polymer. The solvent may be included in a slurry such that the solid content of the slurry is about 5% to about 75% by weight based on the total weight of the slurry (including the solvent). In certain embodiments, a solvent can simultaneously serves as a viscosity modifier to adjust the viscosity of the slurry.

Once prepared, a slurry may be applied onto a cathode current collector and dried to provide a composite oxide sheet in the form of a sheet-shaped molded body. Any cathode current collector may be used provided it has suitable conductivity and will not cause chemical change in a batter of which it is part. In one embodiment, the cathode current conductor may comprise stainless steel, aluminum, nickel, titanium, calcined carbon, aluminum surface-treated with carbon, nickel, titanium or silver, stainless-steel surface-treated with carbon, nickel, titanium or silver, or an alloy, such as an aluminum-cadmium alloy. In certain embodiments, the surface of the cathode current collector has fine irregularities to increase the bonding strength of the cathode active material to the current collector. A cathode current collector may be provided in any form, such as, but not limited to, a film, a sheet, a foil, a net, a porous material, a foam, or a non-woven fabric. The cathode current collector may also be provided in any suitable thickness. In one embodiment, the cathode current collector may have an average thickness of about 3 $\mu$m to about 50 $\mu$m.

The slurry, once prepared, may be applied to one or more surfaces of the cathode current collector. The method of applying the slurry on the one or more surfaces of the cathode current collector is not particularly limited, and a method such as bar coating, casting, spraying, or the like may be used. In one embodiment, the slurry may be applied on the cathode current collector at a loading weight (LW) of about 50 mg/cm$^2$ to about 5000 mg/cm$^2$.

Once applied to the cathode current collector, the slurry may be dried to remove the solvent, thereby producing a sheet-shaped composite oxide sheet. The drying of the slurry may be carried out by any method and is not particularly limited. In one embodiment, the slurry may be dried using a convection oven or the like. Drying may be carried out at any temperature, for example, about 50°C to about 200°C. In some embodiments, drying is carried out at a temperature of about 8°C to about 120°C. Drying may be performed for any period of time, such as but not limited to, about 0.5 hours to 5 hours, such as about 1 hour to about 3 hours, or longer, if needed.

The composite oxide sheet thereby obtained may then be light sintered to form a sintered composite oxide sheet on the cathode current collector, thereby forming a composite cathode. In particular, heat may be generated in the composite oxide sheet using light, either through inducing a resonance phenomenon between the intrinsic wavelength region of the composite oxide sheet and the wavelength region of the light, or through a light-to-heat conversion, in which light absorbed by the composite oxide sheet is converted into heat. The heat thus generated in the composite oxide sheet generates a thermal activation reaction in the composite oxide sheet, or "sinters" the composite oxide sheet.

In some embodiments, when the composite oxide sheet is irradiated with light during light sintering, the portion of the light that is absorbed by the composite oxide sheet may generate heat, thereby increasing the temperature of a material in the sheet. Under repeated irradiation, the elevated temperature of composite oxide sheet may be maintained thereby generating the light-sintering effect. The degree of sintering of the composite oxide sheet may be adjusted by adjusting the time to which the composite oxide sheet is exposed to the irradiating light.

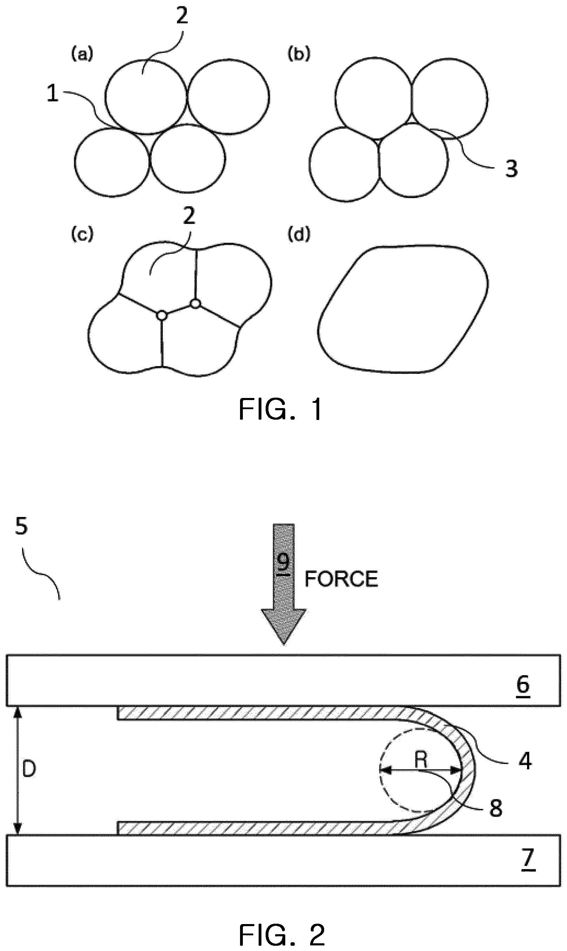

The process of light sintering a composite oxide sheet will be described in further detail with reference to **FIG. 1.** In portion (a), before sintering or in early stages of sintering, the boundary **1** between particles **2,** which may be cathode active material particles, oxide-based solid electrolyte particles, conductive material particles, and/or light sintering aid particles is a substantially a point contact, wherein there is minimal contact between the surface of the particles. As the sintering proceeds, as shown in portion (b), point contacts gradually expand to form surface contacts **3.** As sintering further proceeds, as shown in portion (c) and portion (d) of **FIG. 1,** the particles may coarsen.

By using a light-sintering method to prepare a cathode composite sheet allows the degree of sintering and therefore conductivity of the cathode composite sheet to be carefully controlled, as illustrated in **FIG. 1.** In portion (a) of **FIG. 1,** ion movement path between the particles may be limited due to the minimal contact between each of the particles **2,** thereby resulting in a large amount of resistance at the boundary between the particles. However, as the particles coarsen during sintering, as illustrated in portions (b), (c), and (d) of **FIG. 1,** contact between particles is increased and space (or pores) between particles decrease and allowing ions to move more freely resulting in fast ion conduction and a durable sintered material. Coarsening of the particles also decreases the volume of the material. The degree of shrinkage depends on contact type between the particles and degree of coarsening of the particles. For example, when grain boundaries (GB) are formed as sintering progresses, volumetric shrinkage rate may be within about 3% (see portion (b) of **FIG. 1**). As the contact between the particles increases and coarsening progresses through further sintering, the volumetric shrinkage rate may increase from about 10% to about 20% (see portion (c) and portion (d) of **FIG. 1**). While conductivity increases when particles are excessively coarsened, volume shrinkage in some materials, such as a thin film, may deteriorate the physical properties of the material. For example, excessive coarsening of a composite oxide sheet may cause detachment of the composite oxide sheet from the cathode current collector and/or cracking of the composite oxide sheet. Therefore, in certain embodiments, a cathode composite sheet may be light sintered to a degree such that surface contact between particles (e.g., such as in portion (b) of **FIG. 1**) is achieved, thereby providing a dense structure and movement path for ions while, at the same time, preventing excessive volume shrinking, breakage, and/or detachment.

In addition to controlling the degree of sintering to avoid degradation of the physical properties of the composite oxide sheet, degree of sintering may also be controlled to avoid generation of a secondary phase between particles, the presence of which may, in some embodiments, decrease overall conductivity of the sintered composite oxide sheet. A composite oxide sheet is heterogenous, comprising cathode active material particles, oxide-based solid electrolyte particles, conductive material particles, and/or light sintering aid particles, each having unique properties, including ability to absorb heat. As such, each has an optimal temperature at which it is sintered. However, during light sintering, all particles are simultaneously sintered under the same conditions, and, in some embodiments, such conditions will not be the optimal sintering temperature for any of the materials. For example, in some embodiments, a cathode active material and an oxide-based solid electrolyte may have a difference in optimal sintering temperature of about 150°C or higher. In some embodiments, the difference in optimal sintering temperature may be about 200°C or higher, about 250°C or higher, about 300°C or higher, about 350°C or higher, or about 400°C or higher. In some embodiments, the difference in optimal sintering temperatures may cause a reaction between heterogeneous particles of the cathode active material and the oxide-based solid electrolyte during light sintering, thereby generating a secondary phase between the particles thereof. The degree of generation of secondary material may be controlled by controlling the temperature and time of light sintering. As such, it is generally not recommended to light sinter the composite oxide sheet at a high temperature for a long time, but rather at a lower temperature for a short time. Because a number of variables that influence heat generation in the composite oxide sheet may be adjusted during light sintering, as will be described in further detail below, light sintering may be used even when the optimal sintering temperatures of the cathode active material and the oxide-based solid electrolyte differ greatly.

In some embodiments, light sintering is performed by a pulsed method, which is a method of applying a strong voltage to a device, such as a light-generating lamp or the like, as a pulse, thereby irradiating strong light generated instantaneously as a pulse. Suitable devices for light sintering by a pulsed method are well known by those of ordinary skill in the art and not particularly limited. During pulsed light sintering, light irradiation time per pulse (on-time), operating voltage (V), duty cycle (%), cycle number, raised temperature frequency constituting the total pulse (fire rate, Hz), repetition number, and the like may be varied to control degree of sintering and generation of secondary material. One of skill in the art will be familiar with these settings and will readily be able to adjust them accordingly without undue experimentation using methods disclosed herein to measure physical characteristics of the composite oxide sheet (e.g., flexural strength) and build up of secondary material (e.g., x-ray diffraction analysis).

In certain embodiments, the light irradiation time per pulse (on-time) used during pulsed light-sintering is about 1000 $\mu$s to about 4500 $\mu$s. In certain embodiments, the light irradiation time per pulse (on-time) is about 1200 $\mu$s or more, or about 1400 $\mu$s or more, and may be about 4400 $\mu$s or less, about 4200 $\mu$s or less, or about 4000 $\mu$s or less.

In certain embodiments, the operating voltage (V) used during pulsed light-sintering is about 100V to about 450V. In certain embodiments, the operating voltage (V) is about 120V or more, or about 150V or more, and may be about 440V or less, about 430V or less, or about 420V or less.

In certain embodiments, the duty cycle (%) used during pulsed light-sintering is about 10% to 100%, such as about 20% to about 90%, wherein duty cycle may be calculated as a value of a ratio (%) of the light irradiation time (on-time) per pulse to a pulse period.

In one embodiment, the cycle number used during the light-sintering is about 1 to about 20 times. In certain embodiments, the cycle number during the light-sintering is about 5 to about 15 times.

When light sintering is carried out using the light irradiation time (on-time), operating voltage (V), duty cycle (%), and cycle number as disclosed herein, the light-sintering process time, calculated by Relationship 1 below, may be advantageously shortened.

$$T_s = C/T_r \, (1)$$

In Relationship 1, $T_s$ is the light-sintering process time (s), $T_r$ is the raised temperature frequency (fire rate, Hz), and C is the number of repetitions.

In certain embodiments, the raised temperature frequency of the total pulse (fire rate, Hz) used during pulsed light-sintering is about 1 Hz to about 50 Hz. In one embodiment, the raised temperature frequency (fire rate, Hz) is about 10 Hz or more and about 40 Hz or less.

In one embodiment, the number of repetitions use during pulsed light-sintering is about 10 to about 1000 times. In one embodiment, the number of repetitions is about 100 or more and about 400 or less.

In one embodiment, the light energy irradiated during pulsed light-sintering is about 25 $J/s \cdot cm^2$ to about 150 $J/s \cdot cm^2$. In one embodiment, the light energy irradiated during pulsed light-sintering about 40 $J/s \cdot cm^2$ to about 120 $J/s \cdot cm^2$.

In one embodiment, light may be irradiated to the composite oxide sheet during pulsed light sintering in a range of about 10 nm to about 1000 nm and repeating the irradiation 10 times or more within about 1 ms. In some embodiments, the irradiation is repeated about 10 to about 1000 times, such as about 100 to about 1000 times, about 250 to about 1000 times, or about 500 to about 1000 times within about 1 ms.

In one embodiment, the temperature of the cathode current collector may be maintained at about 300°C or less during light sintering. In one embodiment, the temperature of the cathode current collector is maintained at about 5°C to about 100°C, about 10°C to about 50°C, or about 15°C to about 30°C. In one embodiment, the temperature of the cathode current collector is maintained substantially at room temperature (e.g., about 20°C to about 25°C). When the temperature of the cathode current collector is maintained at a temperature within the above-described range during light sintering, thermal stress may be reduced or prevented in the cathode current collector, thereby maintaining durability and stability thereof.

It may be noted that a composite cathode may be prepared by a thermal sintering method, however, when performed for a long time by applying high-temperature heat (e.g., about 1200°C for a long time of 1 hour or more), over-sintering of one or more of the constituent materials therein is more likely, particularly when the material has a relatively low sintering temperature. As such, a composite cathode having a composition as disclosed herein but prepared by thermal sintering methods may be brittle and not flexible.

In contrast, a sintered composite oxide sheet obtained by light-sintering according to the methods disclosed herein, may display durability and flexibility, such that the light-sintered composite oxide sheet may be wound into a roll to store, transport, and supply the same to preparation of a secondary battery.

The methods disclosed herein may be used to produce a sintered composite oxide sheet of varying thickness while maintaining durability and flexibility thereof by carefully controlling the degree of sintering. For example, in one embodiment, a sintered composite oxide sheet having a thickness of about 300 $\mu$m or less, about 250 $\mu$m or less, about 200 $\mu$m or less, or about 100 $\mu$m or less, and about 10 $\mu$m or more, about 20 $\mu$m or more, about 30 $\mu$m or more, about 40 $\mu$m or more, or about 50 $\mu$m or more may be produced. In some embodiments, a sintered composite oxide sheet having a thickness of about 10 $\mu$m to about 300 $\mu$m or about 10 $\mu$m to about 250 $\mu$m or about 10 $\mu$m to about 200 $\mu$m may be produced.

In some embodiments, the methods disclosed herein may produce a sintered composite oxide sheet having no or significantly no secondary phase. In such embodiments, the crystal phase of the particles in the sintered composite oxide sheet is substantially identical to the crystal phase of the particles in the composite oxide sheet before sintering. Characterization of the crystal phase of each material may be carried out by methods known to one of ordinary skill in the art, such as X-ray diffraction analysis. As used herein, substantially identical refers to no significant difference, as understood by one of skill in the art, between X-ray diffraction patterns obtained for the composite oxide sheet before and after sintering.

In some embodiments, the methods disclosed herein may produce a sintered composite oxide sheet having an ion conductivity of about $1 \times 10^{-5}$ S/cm or more, when measured at room temperature (*e.g.,* 25°C). In some embodiments, a sintered composite oxide sheet produced by the methods disclosed herein may have an ion conductivity of about $1 \times 10^{-2}$ to $1 \times 10^{-5}$ S/cm, when measured at room temperature (*e.g.,* 25°C).

While significant formation of a secondary phase may be prevented using the methods disclosed herein, in certain embodiments, generation of a secondary phase may be unavoidable or may be advantageous (e.g., if the secondary phase is conductive). As such, in some embodiments, a sintered composite oxide sheet may comprise a secondary phase comprising at least one element present in the oxide-based solid electrolyte and the cathode active material. In certain embodiments, a secondary phase is present in the sintered material in a content of about 10% by weight or less, *e.g.,* about 7.5% by weight or less, about 5% by weight or less, about 3% by weight or less, about 1% by weight or less, or about 0.5% by weight or less based on the total weight of the sintered composite oxide sheet.

In some embodiments, the methods disclosed herein may produce a flexible composite cathode. Quantitatively, flexibility may be measured and reported as a radius of curvature and flexural strength.

Methods for measuring radius of curvature ($R_c$) is well known by one of skill in the art, but in some embodiments may be measured by placing a composite cathode sample **4** (e.g., a sample having a size of 3 cm × 4 cm) in a compression tester **5** as illustrated in **FIG. 2** and lowering the top plate **6** towards the bottom plate **7** to apply a downward force **9** to the composite cathode sample **4**. A radius of curvature ($R_c$) may be defined as the radius of curvature of the composite cathode **8** at a time point at which the sintered composite oxide sheet of the composite cathode becomes detached therefrom. In some embodiments, the methods disclosed herein may produce a composite cathode having a $R_c$ of about 5R or less, such as about 0.5R to about 5R. In some embodiments, $R_c$ of the composite cathode is about 0.1R or more, about 0.5R or more, about 1R or more, or about 1.5R or more, and may be about 5R or less, about 4.5R or less, about 4R or less, or about 3.5R or less.

Methods of measuring flexural strength are also well known by one of skill in the art. Still referring to **FIG. 2,** in some embodiments flexural strength is determined by measuring the distance (D) between plates **6, 7** at the maximum force to which the composite cathode may be subjected before breaking or detachment of the sintered composite oxide sheet from the cathode current collector, and calculating flexural strength (σ) by Relationship 2, as follows:

$$\sigma = 1.19814 E \frac{t}{D - t} \qquad (2)$$

In Relationship 2, t is a thickness (μm) of a central portion of the specimen, E is Young's modulus, and D is a distance between the upper plate and the lower plate at a maximum force. In some embodiments, the methods disclosed herein may produce a composite cathode having flexural strength (σ) of about 4 GPa or more. In certain embodiments, the flexural strength (σ) of the composite cathode is about 4 GPa to about 20 GPa, such as about 4 GPa or more, about 5 GPa or more, about 6 GPa or more, or about 7 GPa or more, and, for example, about 20 GPa or less, about 19 GPa or less, about 18 GPa or less, about 17 GPa or less, about 16 GPa or less, about 15 GPa or less, about 13 GPa or less, or about 12 GPa or less.

In some embodiments, the cathode current collector may be selected so as to have a smaller radius of curvature ($R_c$) than the sintered composite oxide sheet. In certain embodiments, when the $R_c$ of the cathode current collector is smaller than that of the sintered oxide sheet, a flexible composite cathode may be produced.

As described herein, a composite oxide sheet, before being subjected to light-sintering, may include a binder (*e.g.,* an organic compound), which may be burned and thereby removed during the sintering process. As such, in some embodiments, a composite cathode prepared by the methods disclosed herein may contain no or substantially no organic binder compound. In other embodiments, if included in the slurry used to prepare the composite oxide sheet, some binder may remain due to non- or incomplete burning thereof. For example, in one embodiment, an organic compound may remain in a content of up to 10% by weight, based on the amount of the binder that was initially introduced into the slurry used to prepare the composite oxide sheet. In certain embodiments, a sintered composite oxide sheet may comprise up to about 3% by weight, for example, about 2% by weight or less, about 1% by weight or less, about 0.5% by weight or less, about 0.3% by weight or less, about 0.1% by weight or less, or about 0.05% by weight or less.

In certain embodiments, an organic binder compound initially included in the composite oxide sheet may be burned during the light-sintering process and therefore may exist in the sintered composite oxide sheet as a burned residue or carbon component. Such carbon component may have inherent conductivity and, together with a conductive material, may facilitate movement of lithium ions in the sintered composite oxide sheet, thereby contributing to reducing interfacial resistance between particles and improving ionic conductivity.

In another aspect, the present disclosure provides an all-solid lithium secondary battery comprising a composite cathode, the composite cathode comprises a sintered composite oxide sheet and cathode current collector, as described herein. A lithium secondary battery may include the composite cathode, an anode, and a solid electrolyte layer between the composite cathode and the anode.

The anode may be any anode known to one of skill in the art. In one embodiment, the anode may include a carbon-based active material, such as artificial graphite, natural graphite, or the like; a silicon-based active material such as silicon, silicon oxide ($SiO_x$, wherein x is between 0 and 2), a Si-C composite, or the like; or a metal such as lithium metal, a lithium-metal alloy, or the like. A solid electrolyte layer may include any electrolyte as disclosed with regard to the oxide-based solid suitable for inclusion in the composite cathode according to any embodiment disclosed herein.

In some embodiments, the all-solid lithium secondary battery may be a non-anode secondary battery. For example, the all-solid lithium secondary battery may be a battery in which an anode current collector does not comprise an anode active material layer. When the non-anode lithium secondary battery is initially charged or first charged, the cathode active material may be delithiated, and lithium ions generated from the cathode active material may be reduced on the anode current collector to form a lithium layer, such as a lithium metal layer or a solid lithium layer.

Hereinafter, the invention disclosed herein will be described in more detail by way of examples. The following examples are examples of the various embodiments disclosed herein and do not limit the instant disclosure.

## EXAMPLES

### Examples 1 to 3

NCM811 as a cathode active material, LLZO as an oxide-based electrolyte, ITO as a conductive material, and PVdF as a binder were mixed in a weight ratio of 57:27:1:0.5. NMP solvent was added thereto and mixed for 3 minutes at 2000 rpm using a centrifugal mixer to prepare a slurry.

The prepared slurry was cast on an aluminum foil (thickness: 3 $\mu$m, $R_c$: 1R, as measured by a doctor blade method), and dried at 60°C for 3 hours to prepare a composite oxide sheet.

Composite cathodes were prepared by irradiating light on a surface of the composite oxide sheet prepared above, in a manner capable of converting strong light energy into a heat source, and performing light-sintering, to obtain sintered composite oxide sheets having a thickness of 30 $\mu$m (Example 1), 80 $\mu$m (Example 2) and 130 $\mu$m (Example 3) on a surface of the aluminum foil, respectively. The light-sintering was performed under the light-sintering conditions as illustrated in **Table 1** below to prepare an oxide-based thin film sintered body.

**[Table 1]**

| Photosintering Conditions | | |
|---|---|---|
| Conditions constituting one pulse | Voltage | 300 V |
| | Light irradiation time per pulse (On-time) | 3000 $\mu$s |
| | Pulse Interval (Off-time) | 60% |
| | Cycle count | 10 cycles |
| Operating conditions | Fire rate | 25 Hz |
| | Number of iterations | 250 repetitions |
| | Irradiated light intensity | 75 J/(s·cm$^2$) |

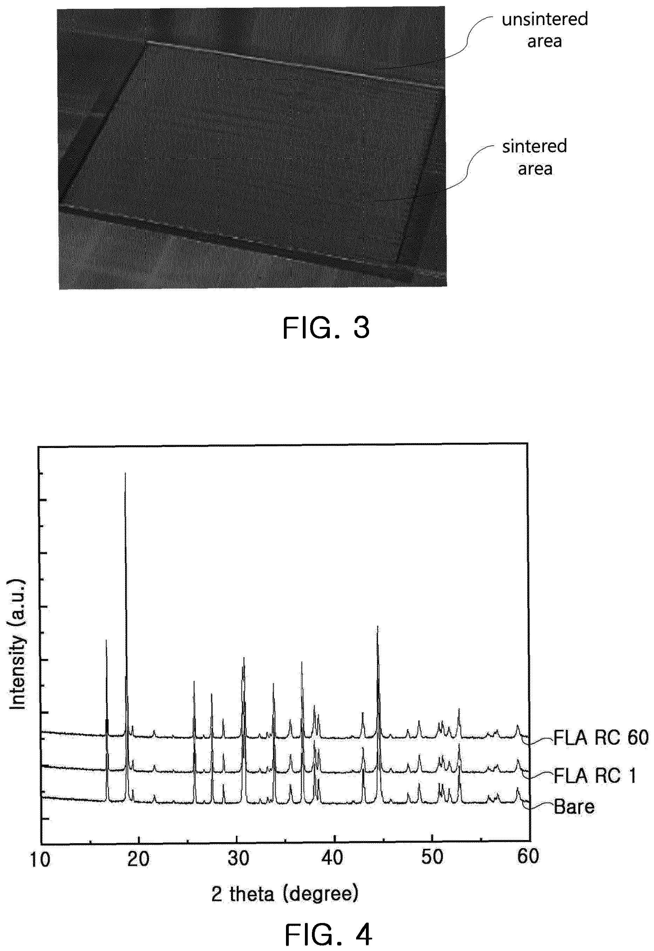

A surface of the sintered composite oxide sheet in the prepared composite cathode of Example 1 was photographed, and the photograph is illustrated in **FIG. 3.**

Referring to **FIG. 3,** it can be seen that the color of the sintered area becomes brighter than that of the unsintered area due to light irradiation, and thus it can be confirmed that sintering has occurred.

### [Generation of Secondary Phase]

The crystal phase of each of the sintered composite oxide sheets of the composite cathodes obtained in Examples 1 and 2 and a crystal phase of the composite oxide sheet before sintering was characterized. Results therefrom are provided in **FIG. 4.** In **FIG. 4,** 'Bare' represents analysis results of the crystal phase before sintering in Example 1, 'FLA RC 1' represents analysis results of the crystal phase of the sintered composite oxide sheet of Example 1, and 'FLA RC 60' represents analysis results of the crystal phase of the sintered composite oxide sheet of Example 2. The crystal phases before sintering in Examples 2 and 3 was the same as the crystal phase before sintering in Example 1.

As can be seen from **FIG. 4,** there was no significant change in the crystal phase before and after sintering. This indicates that no chemical reaction occurs between the cathode active material and the oxide-based solid electrolyte, such that a reaction phase between the two materials is not generated.

This indicates the substantial absence of a secondary phase between the two materials. Although not illustrated in **FIG. 4,** the sintered composite oxide sheet obtained in Example 3 also did not appear to contain a significant amount of a secondary phase between the two materials.

**[Flexibility]**

Each of the composite cathodes prepared above were cut into a size of 3 cm × 4 cm to prepare composite cathode sheet samples. A radius of curvature ($R_c$) and flexural strength of each composite cathode sheet sample was determined as follows.

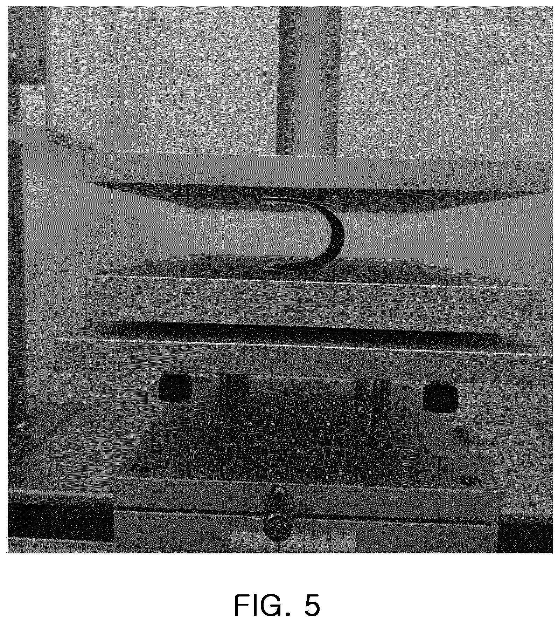

As illustrated in **FIG. 5,** each composite sheet sample was disposed in a compression tester. The top plate was slowly lowered, increasing the force on the sample to 1000 gf, over 10 seconds.

As the force increased, the distance between plates right before the sintered composite oxide sheet of the composite cathode detached from the aluminum foil was noted and flexural strength was thus calculated according to Relationship 2 below:

$$\sigma = 1.19814E\frac{t}{D-t} \qquad (2)$$

In Relationship 2, E is Young's modulus, t is a thickness ($\mu$m) of a central portion of the composite cathode sheet, D is a distance ($\mu$m) between the upper plate and the lower plate immediately before breaking the composite cathode sheet.

As force was applied to the composite cathode sample sheet, the composite cathode sheet compressed and passed through varying radii of curvatures. **Table 2** provides the force applied to each composite cathode sheet at each radius of curvature through which it passed.

**[Table 2]**

| Radius of Curvature | 0.5R | 1R | 2R | 3R | 4R | 5R |
|---|---|---|---|---|---|---|
| Example 1 | - | - | - | - | - | - |
| Example 2 | - | 206.24 gf | 69.736 gf | 41.465 gf | 24.502 gf | 14.674 gf |
| Example 3 | - | 275.175 gf | 105.277 gf | 53.850 gf | 29.887 gf | 20.463 gf |

In Example 1, having a thickness of 30 $\mu$m, detachment of the coating layer did not occur until the radius of curvature was 0.5R, when a maximal force of 1000 gf was applied, demonstrating that Example 1 had desirable flexibility.

In Example 2, which had a thickness of 80 $\mu$m, detachment of the composite cathode layer did not occur at curvature radii of 4R and 5R, but damage and detachment of the coating layer occurred at 2R to 3R. The force applied to the composite (considered the bending maximum load values) at 2R and 3R were 69.736gf and 41.465gf, respectively.

In Example 3, which had a thickness of 130 $\mu$m, the composite cathode layer did not detach at curvature radii of 4R and 5R, but the coating layer was damaged and detached at curvature radii of 2R to 3R. The force applied to the composite at 2R and 3R were 105.277gf and 53.850gf, respectively.

From the above results, it can be seen that composite cathodes having varying thicknesses prepared by the light-sintering methods as disclosed herein are flexible even when the cathode active material and solid electrolyte display a large difference between optimal sintering temperature.

Only specific examples of implementations of certain embodiments may be described. Variations, improvements and enhancements of the disclosed embodiments and other embodiments may be made based on the instant disclosure.

**Claims**

1.  A method for preparing a composite cathode of an all-solid battery, comprising:

    applying a slurry for the composite cathode including a cathode active material and an oxide-based solid electrolyte on a substrate to form a composite oxide sheet; and
    light-sintering the composite oxide sheet by irradiating light to form a sintered composite oxide sheet.

2.  The method of claim 1, wherein the light-sintering is performed in a pulsed method.

3.  The method of claim 1 or 2, wherein the light-sintering is performed in condition satisfying at least one of i) and ii):

i) a light irradiation time per pulse in the light-sintering is 1000 to 4500 $\mu$s, and
ii) a light intensity irradiated during the light-sintering is 25 to 150 J/(s·cm$^2$).

4. The method of any one of claims 1 to 3, wherein the cathode active material and the oxide-based solid electrolyte have a sintering temperature difference of 150°C or higher.

5. The method of any one of claims 1 to 4, wherein the slurry for a composite cathode further comprises a light-sintering aid, and
wherein the light-sintering aid is an oxide particle containing lithium and at least one selected from the group consisting of chromium (Cr), manganese (Mn), cobalt (Co), nickel (Ni), copper (Cu), niobium (Nb), molybdenum (Mo), ruthenium (Ru), rhodium (Rh), palladium (Pd), vanadium (V), tungsten (W), iron (Fe), cerium (Ce), praseodymium (Pr), neodymium (Nd), terbium (Tb), erbium (Er), zinc (Zn), bismuth (Bi), arsenic (As), antimony (Sb), and selenium (Se).

6. The method of any one of claims 1 to 5, wherein the slurry for a composite cathode further comprises at least one selected from the group consisting of a carbon-based conductive material, a metal oxide-based conductive material, and a binder.

7. The method of any one of claims 1 to 6, wherein a crystal phase of the composite oxide sheet is identical to a crystal phase of the sintered composite oxide sheet.

8. The method of any one of claims 1 to 7, wherein the substrate is a cathode current collector.

9. A composite cathode of an all-solid battery comprising a cathode current collector, and a sintered composite oxide sheet including a cathode active material and an oxide-based solid electrolyte, formed on at least one surface of the cathode current collector, and
having a radius of curvature of 5R or less.

10. The composite cathode of claim 9, wherein the cathode active material and the oxide-based solid electrolyte have a sintering temperature difference of 150°C or higher.

11. The composite cathode of claim 9 or 10, wherein the sintered composite oxide sheet comprises at least one of 10% by weight or less of a secondary phase between the cathode active material and the oxide-based solid electrolyte; and 10% by weight or less of an organic compound.

12. The composite cathode of any one of claims 9 to 11, wherein the sintered composite oxide sheet satisfies at least one of i) a flexural strength ($\sigma$) of 4 GPa or more calculated by the following relationship 2, or ii) an ionic conductivity of 10$^{-5}$ S/cm or more:

$$\sigma = 1.19814 E \frac{t}{D-t} \qquad (2)$$

in the above relationship 2,
E is Young's modulus, t is a thickness ($\mu$m) of a central portion of a specimen, D is a distance ($\mu$m) between an upper plate and a lower plate immediately before breaking the specimen, when the specimen is placed between the upper plate and the lower plate in parallel and the up surface-treated with carbon, nickel, titanium or silver per plate is lowered.

13. The composite cathode of any one of claims 9 to 12, wherein the light-sintering aid is a lithium metal oxide particle containing lithium and at least one selected from the group consisting of chromium (Cr), manganese (Mn), cobalt (Co), nickel (Ni), copper (Cu), niobium (Nb), molybdenum (Mo), ruthenium (Ru), rhodium (Rh), palladium (Pd), vanadium (V), tungsten (W), iron (Fe), cerium (Ce), praseodymium (Pr), neodymium (Nd), terbium (Tb), erbium (Er), zinc (Zn), bismuth (Bi), arsenic (As), antimony (Sb), and selenium (Se).

14. The composite cathode of any one of claims 9 to 13, wherein a radius of curvature of the cathode current collector is smaller than a radius of curvature of the sintered composite oxide sheet.

**15.** An all-solid lithium secondary battery comprising the composite cathode of any one of claims 9 to 14, a solid electrolyte layer, and an anode.

FIG. 1

FIG. 2

unsintered
area

sintered
area

FIG. 3

FLA RC 60

FLA RC 1

Bare

FIG. 4

FIG. 5

Europäisches
Patentamt

European
Patent Office

Office européen
des brevets

# EUROPEAN SEARCH REPORT

Application Number

EP 23 22 0232

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 221 026 A (HEBEI LIXING SEMICONDUCTOR TECH CO LTD ET AL.) 22 March 2022 (2022-03-22) * claims 1-10 * * paragraphs [0011], [0030], [0031] * | 1-15 | INV. H01M4/04 H01M4/131 H01M4/1391 H01M4/62 H01M10/052 H01M10/0562 |
| X | CN 110 970 668 B (INST PROCESS ENG CAS; LANGFANG INST OF PROCESS ENGINEERING CAS) 8 October 2021 (2021-10-08) * claims 1-32 * | 1-15 | ADD. H01M4/02 |
| X | JP 2021 072232 A (UNIV OKAYAMA; UNIV NAGASAKI) 6 May 2021 (2021-05-06) * claims 1-8 * * paragraphs [0001], [0002] * | 1-15 | |
| X | EP 3 916 875 A1 (DAINIPPON PRINTING CO LTD [JP]) 1 December 2021 (2021-12-01) * paragraphs [0032] - [0039], [0056] - [0061] * | 9-15 | |
| A | | 1-8 | |
| X | JP 2021 140892 A (TOYOTA MOTOR CORP) 16 September 2021 (2021-09-16) * paragraphs [0018], [0043], [0004] * | 9-15 | TECHNICAL FIELDS SEARCHED (IPC) H01M |
| A | | 1-8 | |

The present search report has been drawn up for all claims

| Place of search | Date of completion of the search | Examiner |
|---|---|---|
| Munich | 3 July 2024 | Haering, Christian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 22 0232

This annex lists the patent family members relating to the patent documents cited in  the above-mentioned European search report.
The members are as contained in the European Patent Office EDP file on
The European Patent Office is in no way liable for these particulars which are merely given for the purpose of information.

03-07-2024

| Patent document cited in search report | | Publication date | Patent family member(s) | | Publication date |
|---|---|---|---|---|---|
| CN 114221026 | A | 22-03-2022 | NONE | | |
| CN 110970668 | B | 08-10-2021 | NONE | | |
| JP 2021072232 | A | 06-05-2021 | NONE | | |
| EP 3916875 | A1 | 01-12-2021 | CN | 113330620 A | 31-08-2021 |
| | | | EP | 3916875 A1 | 01-12-2021 |
| | | | JP | 6777276 B1 | 28-10-2020 |
| | | | JP | WO2020153456 A1 | 18-02-2021 |
| | | | KR | 20210116441 A | 27-09-2021 |
| | | | US | 2022069390 A1 | 03-03-2022 |
| | | | WO | 2020153456 A1 | 30-07-2020 |
| JP 2021140892 | A | 16-09-2021 | NONE | | |

EPO FORM P0459

For more details about this annex : see Official Journal of the European Patent Office, No. 12/82